# EUROPEAN PATENT APPLICATION

(11) **EP 4 694 231 A1**
(43) Date of publication of application: **11.02.2026**
(21) Application number: 24784256.0
(22) Date of filing: 02.04.2024
(51) Int. Cl.: H04W 4/80

(54) **NETWORKING METHOD AND APPARATUS FOR BLUETOOTH DEVICE, AND DEVICE**

(30) Priority: 07.04.2023 CN 202310378142
(71) Applicant: ALIPAY PAYMENT TECHNOLOGY CO., LTD., Shanghai 200120 (CN)
(72) Inventor: YANG, Yuelong, Hangzhou, Zhejiang 310000 (CN)
(74) Representative: Winter, Brandl - Partnerschaft mbB
(86) International application number: PCT/CN2024/085449
(87) International publication number: WO 2024/208172

(57) **Abstract**

Embodiments of this specification disclose a networking method and apparatus for a Bluetooth device, and a device. A service request using a client standard protocol that is sent by a Bluetooth device is received; first device information of the Bluetooth device is obtained; a communication link is determined based on the first device information, where the communication link uses the client standard protocol; and the service request is transmitted to a server over the communication link. As such, wide adaptation to different types of Bluetooth devices is implemented, so that different types of Bluetooth devices can obtain a networking capability in this method, and adaptability is wider.

## Description

### TECHNICAL FIELD

This specification relates to the field of Internet technologies, and in particular, to a networking method and apparatus for a Bluetooth device, and a device.

### BACKGROUND

With the development of the Internet of Things, types of Bluetooth devices have also become increasingly diverse. Out of consideration of costs and power consumption, some smart wearable watches do not possess a networking capability, that is, the smart wearable watches lack the ability to make a periodic or near-real-time network request to a remote server. To overcome this weakness, some device manufacturers provide a solution of using a mobile phone device or a vendor application to connect a Bluetooth device to a network. However, this solution is generally closed, and it is difficult to satisfy networking requirements of increasingly more types of Bluetooth devices at the same time. As a result, adaptability is poor.

Based on this, a more adaptive networking solution for a Bluetooth device is needed.

### SUMMARY

Embodiments of this specification provide a networking method and apparatus for a Bluetooth device, a device, and a storage medium, to resolve the following technical problem: A more adaptable networking solution for a Bluetooth device is needed.

To resolve the above-mentioned technical problem, one or more embodiments of this specification are implemented as follows: According to a first aspect, embodiments of this specification provide a networking method for a Bluetooth device, where the method is applied to a client, and includes the following: receiving a service request using a client standard protocol that is sent by the Bluetooth device; obtaining first device information of the Bluetooth device; determining a communication link based on the first device information, where the communication link uses the client standard protocol; and transmitting the service request to a server over the communication link.

According to a second aspect, embodiments of this specification provide another networking method for a Bluetooth device, where the method is applied to the Bluetooth device, and includes the following: generating a service request, and determining a protocol type of the service request; converting the protocol type of the service request into a client standard protocol; and sending a service request using the client standard protocol to a client, so that the client determines a communication link and transmits the service request to a server based on the communication link.

According to a third aspect, corresponding to the first aspect, embodiments of this specification provide a networking apparatus for a Bluetooth device, where the apparatus is applied to a client, and includes the following: a receiving module, configured to receive a service request using a client standard protocol that is sent by the Bluetooth device; an acquisition module, configured to obtain first device information of the Bluetooth device; a determining module, configured to determine a communication link based on the first device information, where the communication link uses the client standard protocol; and a transmission module, configured to transmit the service request to a back-end server over the communication link.

According to a fourth aspect, corresponding to the second aspect, embodiments of this specification provide a networking apparatus for a Bluetooth device, where the apparatus is applied to a Bluetooth device, and includes the following: a generation module, configured to generate a service request and determine a protocol type of the service request; a conversion module, configured to convert the protocol type of the service request into a client standard protocol; and a sending module, configured to send a service request using the client standard protocol to a client, so that the client determines a communication link and transmits the service request to a server based on the communication link.

According to a fifth aspect, one or more embodiments of this specification provide an electronic device, including at least one processor and a storage communicatively connected to the at least one processor. The storage stores instructions executable by the at least one processor, and the instructions are executed by the at least one processor, to cause the at least one processor to perform the method according to the first aspect or the second aspect.

According to a sixth aspect, embodiments of this specification provide a non-volatile computer storage medium that stores computer-executable instructions. After a computer reads the computer-executable instructions in the storage medium, the instructions cause one or more processors to perform the method according to the first aspect.

The above-mentioned at least one technical solution used in one or more embodiments of this specification can achieve the following beneficial effects: A service request using a client standard protocol that is sent by a Bluetooth device is received; first device information of the Bluetooth device is obtained; a communication link is determined based on the first device information, where the communication link uses the client standard protocol; and the service request is transmitted to a server over the communication link. As such, wide adaptation to different types of Bluetooth devices is implemented, so that different types of Bluetooth devices can obtain a networking capability in this method, and adaptability is wider.

### BRIEF DESCRIPTION OF DRAWINGS

To describe the technical solutions in the embodiments of this specification more clearly, the following briefly describes the accompanying drawings required for describing the embodiments. Clearly, the accompanying drawings in the following description show merely some embodiments of this specification, and a person of ordinary skill in the art can still derive other drawings from these accompanying drawings without creative efforts.
FIG. 1 is a schematic flowchart illustrating a networking method for a Bluetooth device, according to embodiments of this specification;
FIG. 2 is a schematic diagram illustrating an architecture of an SDK end of a Bluetooth device, according to embodiments of this specification;
FIG. 3 is a schematic diagram illustrating link aggregation, according to embodiments of this specification;
FIG. 4 is a schematic diagram illustrating a system architecture of a device on which a client is located, according to embodiments of this specification;
FIG. 5 is a schematic flowchart illustrating another networking method for a Bluetooth device, according to embodiments of this specification;
FIG. 6 is a schematic diagram illustrating a structure of a networking apparatus for a Bluetooth device, according to embodiments of this specification;
FIG. 7 is a schematic diagram illustrating a structure of another networking apparatus for a Bluetooth device, according to embodiments of this specification; and
FIG. 8 is a schematic diagram illustrating a structure of an electronic device, according to embodiments of this specification.

### DESCRIPTION OF EMBODIMENTS

Embodiments of this specification provide a networking method and apparatus for a Bluetooth device, a device, and a storage medium.

To enable a person skilled in the art to better understand the technical solutions in this specification, the following clearly and comprehensively describes the technical solutions in the embodiments of this specification with reference to the accompanying drawings in the embodiments of this specification. Clearly, the described embodiments are merely some rather than all of the embodiments of this specification. All other embodiments obtained by a person of ordinary skill in the art based on the embodiments of this specification without creative efforts shall fall within the protection scope of this specification.

In current Bluetooth devices, especially in those wearable intelligent Bluetooth devices, out of consideration of costs and power consumption, a networking function is generally not possessed. The networking function here refers to a function that the Bluetooth device cannot interact with a remote server independently.

However, in actual applications, some functions in these devices also need the networking function. For example, when a Bluetooth watch provides a QR code payment service, a payment receiving code and a payment code need to be obtained from a server. The payment receiving code may remain unchanged in a week (the Bluetooth watch may need to interact with the server to update the payment receiving code once in a week, that is, the payment receiving code needs to be networked periodically), and the payment code may fail in a minute (the Bluetooth watch may need to interact with the server once in a minute to update the payment code, that is, the payment code requires near-real-time networking).

To implement this function, current manufacturers of a Bluetooth device also provide some corresponding solutions. In a first solution, a vendor that can produce both mobile phones and Bluetooth devices establishes a device communication link between the Bluetooth device and the mobile phone based on an operating system built in the mobile phone and the Bluetooth device that are produced by the vendor. However, the link is relatively closed and usually cannot be transplanted for use by other Bluetooth devices.

In a second solution, a vendor that can produce only Bluetooth devices usually further develops a corresponding vendor application based on an Android system and an IOS system, and establishes a communication link with the Bluetooth device through the vendor application. This method is also closed. On the one hand, the vendor application usually can be provided only to a Bluetooth device of the vendor for linking, a connection is unstable, and a background operation is prone to be limited. On the other hand, for a user, this method means that when a Bluetooth device from a new vendor is used, a new vendor application needs to be downloaded and installed, and poor experience is caused. Based on this, embodiments of this specification provide networking solutions for a Bluetooth device to adapt to a wider range of Bluetooth devices. Embodiments of this specification include two aspects: a client and a Bluetooth device.

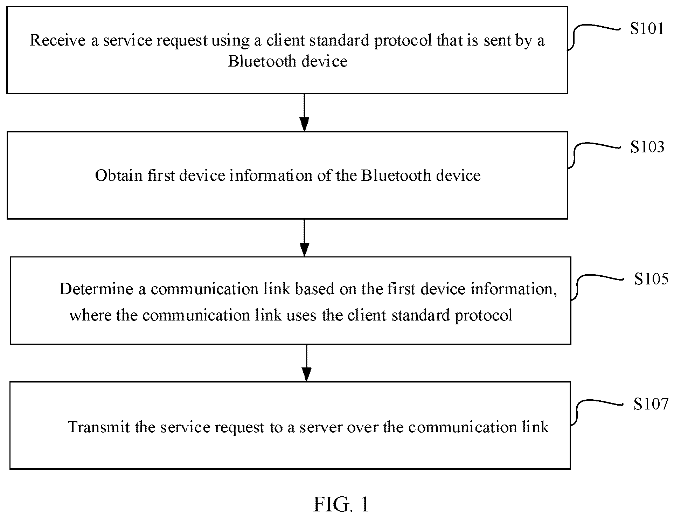

According to a first aspect, FIG. 1 is a schematic flowchart illustrating a networking method for a Bluetooth device, according to embodiments of this specification. The method is applied to a client, and a procedure in FIG. 1 can include step S101 to step S107.

S101: Receive a service request using a client standard protocol that is sent by the Bluetooth device.

On the Bluetooth device, because different manufacturers use different types of devices, the devices use different types of chips and provide different services. Thus, internal protocols used by the devices differ significantly.

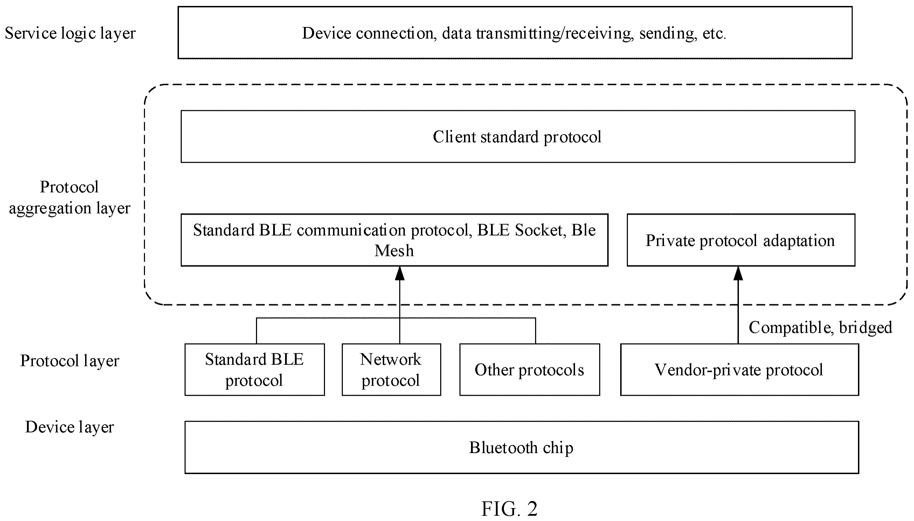

For example, functions provided by some Bluetooth devices may only need to use a BLE standard protocol, but other Bluetooth devices may use a vendor-private protocol so as to provide some functions customized by the manufacturer. To adapt to a wide range of Bluetooth devices, a set of software development kits (SDK) corresponding to the Bluetooth device are further provided in a development process. FIG. 2 is a schematic diagram illustrating an architecture of an SDK end of a Bluetooth device, according to embodiments of this specification.

Based on this architecture, in a development process, different types of protocols can be selected based on actual needs, and a set of client standard protocols are provided at a protocol aggregation layer through protocol adaptation, so that any protocol used in the Bluetooth device can be converted into the client standard protocol for external communication.

In this development process, a client can provide a corresponding platform, and a vendor adapts to and aggregates private protocols on the platform, and finally transplants a generated corresponding code to a Bluetooth device. In other words, this process is not complex for a vendor of the Bluetooth device, and only a corresponding private protocol needs to be provided and adapted to the client standard protocol. A code that ultimately needs to be transplanted does not contain other unrelated protocol types. In this method, while implementing a standard BLE standard protocol for interaction, the Bluetooth device is also bridged and compatible with a private protocol of the vendor, thereby maximizing the utilization of an existing link function.

The service request can include, for example, connection establishment, binding, device wakeup, data forwarding, a proxy request network service, and a service request service. The service request needs a networking function, that is, the Bluetooth device needs to communicate with a remote server.

S103: Obtain first device information of the Bluetooth device.

The first device information includes a device model, a chip model, a vendor, etc. of the Bluetooth device. The Bluetooth device can include the first device information in a process of sending the service request. In addition, the client can further obtain first device information of a Bluetooth device in a surrounding environment through scanning.

For example, the client determines, by using a Bluetooth scanning function provided by a device on which the client is located, that a type of the Bluetooth device is "Mi Smart Band 6", so as to obtain a corresponding band type, and further obtains a device model, a chip model, and a vendor that correspond to the band type.

S105: Determine a communication link based on the first device information, where the communication link uses the client standard protocol.

After obtaining the first device information of the Bluetooth device, the client needs to determine the corresponding communication link between the Bluetooth device and the server, so as to implement a service request that needs a networking function. Because different communication links have been pre-aggregated in the client, corresponding matching can be performed based on the first device information (that is, a device model, a chip model, a vendor, etc. of the Bluetooth device), so as to determine and obtain the communication link, and the above-mentioned client standard protocol is used when information is transmitted on the determined and obtained communication link.

In an implementation, if the communication link is determined based on the first device information, the communication link can be determined based on the first device information and a service request type; or second device information of the device on which the client is located is obtained, and the communication link is determined based on the first device information and the second device information.

A predetermined device set includes device information included by a Bluetooth device on which corresponding protocol aggregation is performed by using the above-mentioned SDK, or the predetermined device set includes device information of a Bluetooth device that is pre-authorized by the client (that is, the Bluetooth device has been authorized by the client to provide a related customized service via the client).

In other words, the Bluetooth device included in the predetermined device set is generally a Bluetooth device including a private protocol, and the Bluetooth device provides a corresponding customized service by using the private protocol. For such a Bluetooth device, a user generally needs to install a vendor application on a local device in advance, so as to implement some customized service requests that can be implemented only by the Bluetooth device.

The service request type here can specifically include whether to match a client type. That is, whether the client can provide corresponding function support for the service request. For example, if the service request type is "get a payment code" and the client type is "payment", it can be considered that the two are matched. Alternatively, a correspondence between the service request type and the client type can be pre-established and stored in the client, so that the client can query, based on the locally stored correspondence, whether a corresponding service request type matches the client. When a match is founded, the client can skip a vendor application to establish a communication link between the Bluetooth device and the client.

As mentioned above, the Bluetooth device uses the client standard protocol during communication. The client standard protocol is a protocol that can be identified and resolved by the client, and a protocol that is used for internal communication of the client or communication between the client and a server corresponding to the client. Thus, a communication link can be seamlessly established between the client and the Bluetooth device. Because the client can be connected to a network by using the remote server, communication between the Bluetooth device and the remote server can be implemented based on the communication link.

In this implementation, when it is found that the first device information belongs to the predetermined device set, and the service request type does not match the client, it can be determined that a client service cannot provide a corresponding function for the service request of the Bluetooth device. In other words, a generation application corresponding to the Bluetooth device needs to perform a customized service so as to implement the service request. In this case, a vendor application (which can be generally preconfigured in the client) corresponding to the first device information can be determined through guidance by the client, so that the client can start the vendor application, establish a communication link between the Bluetooth device and the vendor application, and connect to a network through the remote server by using the vendor application.

In an implementation, when the communication link is determined based on the first device information and the second device information, matching can be performed between the first device information and the second device information, and when the first device information matches the second device information, a device communication link provided by the device on which the client is located is determined, and a communication link between the Bluetooth device, the device communication link, and the client is established.

A condition for matching between the first device information and the second device information can include the following: the same vendor, the same device model, etc. Both the Bluetooth device and the device on which the client is located are manufactured by the same vendor, and even the Bluetooth device may be a peripheral device of the device on which the client is located. In this case, generally, the vendor designs a device communication link between devices of the vendor based on a capability of a chip such as Bluetooth, WiFi, or NFC and a development engine. Then, communication between the Bluetooth device and the device on which the client is located is implemented based on the device communication link, and the communication includes proxying and forwarding a network request of a Bluetooth device end. Because the entire device communication link, including chips, systems, and devices, is controlled by the vendor, this link is usually stable.

In an implementation, when the first device information does not belong to the predetermined device set (that is, the Bluetooth device is not a predetermined vendor device), a standard communication link provided by an operating system of the device on which the client is located needs to be used to establish a communication link between the Bluetooth device and the standard communication link. In this operation method, a link for communicating with the Bluetooth device is established by using a universal Bluetooth capability provided by the operating system.

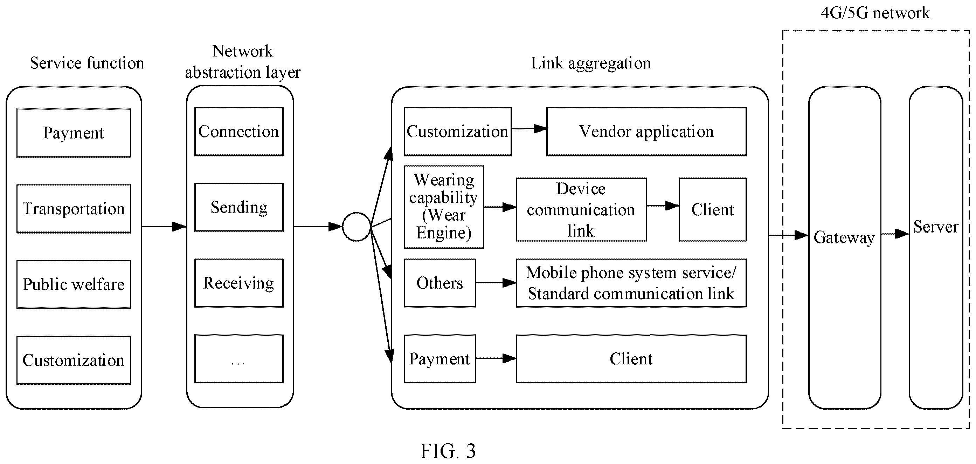

In addition, it is also worthwhile to note that, if the Bluetooth device itself has a 4G/5G networking function, for example, some Bluetooth devices can interact with the remote server by using a cellular network (CAT1/CAT4), the solution in this specification can also be compatible with such Bluetooth devices. When the 4G/5G networking function of the Bluetooth device is unavailable, the solution in this specification can be used for networking. FIG. 3 is a schematic diagram illustrating link aggregation, according to embodiments of this specification. As can be seen from this schematic diagram, a complete communication link should include a complete link from a service initiator to a server, for example, for a customized service, a corresponding communication link should be as follows: initiating a customized service → sending a request → a vendor application → a gateway → a server. In addition, a data reflow portion is omitted in this schematic diagram. Generally, a communication link used for data reflow is the same link, and only a data flowing direction is opposite.

S107: Transmit the service request to the server over the communication link.

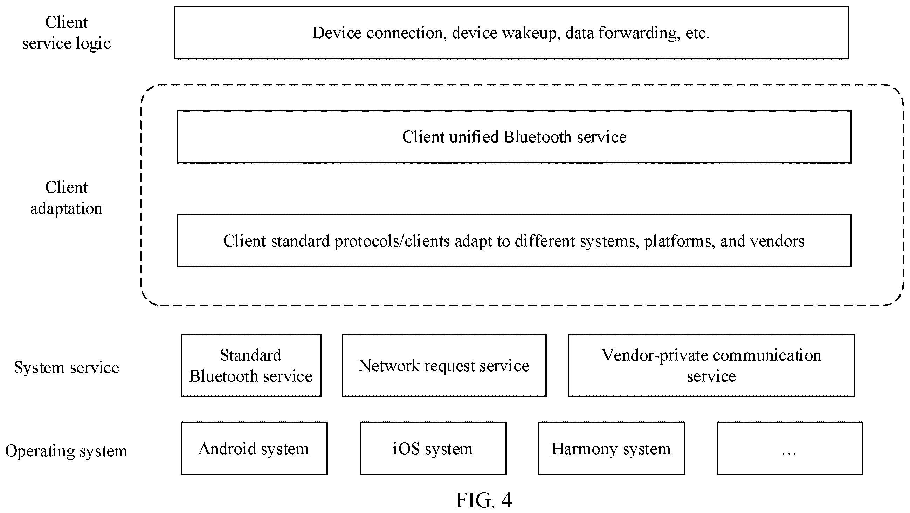

In the established communication link, the service request is forwarded to the server based on different communication links through a gateway, so as to implement a networking function of the Bluetooth device. FIG. 4 is a schematic diagram illustrating a system architecture of a device on which a client is located, according to embodiments of this specification. With this architecture, the client is adapted to different operating systems, platforms, and a wide range of communication protocols, thereby implementing a unified Bluetooth service for various Bluetooth devices.

A service request using a client standard protocol that is sent by a Bluetooth device is received; first device information of the Bluetooth device is obtained; a communication link is determined based on the first device information, where the communication link uses the client standard protocol; and the service request is transmitted to a server over the communication link. As such, wide adaptation to different types of Bluetooth devices is implemented, so that different types of Bluetooth devices can obtain a networking capability in this method, and adaptability is wider.

In an implementation, when the communication link is determined based on the first device information, especially when the client establishes a communication connection to the Bluetooth device for the first time, the client can scan surrounding Bluetooth devices based on a Bluetooth device scanning function provided by the device on which the client is located, to obtain a universally unique identifier (UUID) included in the first device information of the Bluetooth device; and a communication link with the client is established based on the universally unique identifier.

Specifically, the client scans surrounding devices to obtain bluetoothDevice and bluetoothSocket (UUID), and then uses bluetoothSocket.connect (UUID) to connect to a surrounding Bluetooth device. The UUID here is a UUID specified by the Bluetooth device.

The Bluetooth device obtains a universally unique identifier BluetoothServerSocket (Name, UUID) by using a Bluetooth adapter, where both Name and UUID are specified by a Bluetooth device intelligent device. The client connects to the Bluetooth device by using this UUID to establish communication between the two parties. In this method, a listening service port with a name and a unique identifier is created, so as to establish the communication link between the two parties.

It is worthwhile to note that the communication link established at this time is still only communication between the Bluetooth device and the client, or the communication link implemented at this time does not need or may have not implemented a networking function.

In an implementation, when there are a plurality of Bluetooth devices around the client, the plurality of Bluetooth devices can form a self-organized Bluetooth network. Bluetooth devices in the Bluetooth network can communicate with each other by using a published/subscribed message system. Any device in the Bluetooth network can be used as a relay device to re-transmit messages received from other devices. One message can be relayed multiple times, so that all devices within a range can receive the message.

Based on this, during the establishment of the first connection, when scanning a plurality of Bluetooth devices, the client can communicate from any device in a Bluetooth network consisting of the Bluetooth devices, receive a universally unique identifier included in first device information of the Bluetooth device and broadcast by the Bluetooth network, and further establish communication with the Bluetooth device based on the universally unique identifier and determine a subsequent communication link.

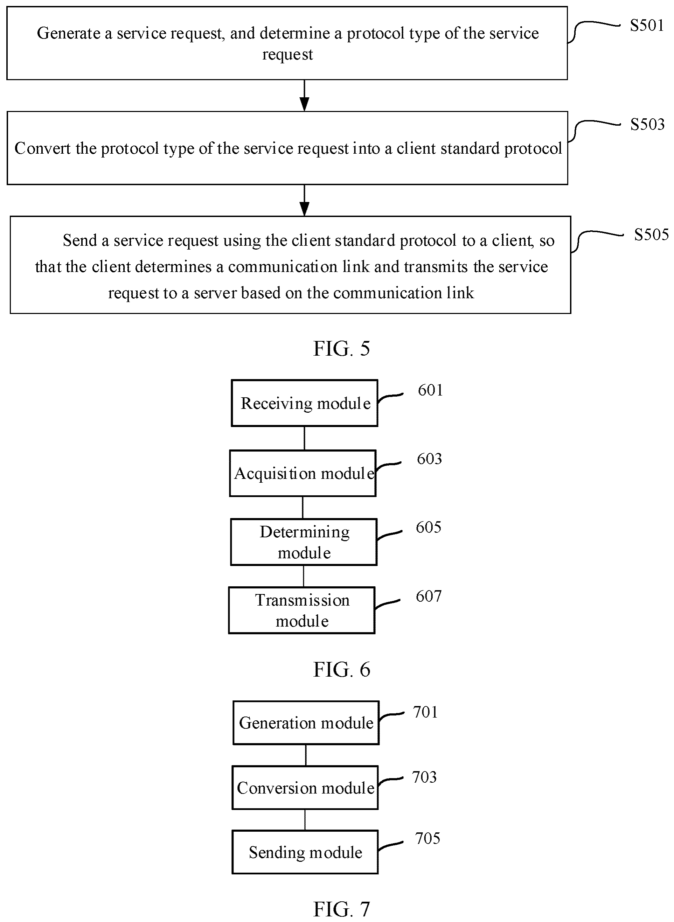

According to a second aspect, FIG. 5 is a schematic flowchart illustrating another networking method for a Bluetooth device, according to embodiments of this specification. The method is applied to a Bluetooth device, and includes the following steps: S501: Generate a service request, and determine a protocol type of the service request. S503: Convert the protocol type of the service request into a client standard protocol. S505: Send a service request that uses the client standard protocol to a client, so that the client determines a communication link and transmits the service request to a server based on the communication link.

The service request can include, for example, connection establishment, binding, device wakeup, data forwarding, a proxy request network service, and a service request service (such as payment, transportation, and public welfare).

As shown in FIG. 2 above, in comparison with a conventional Bluetooth device, a protocol aggregation layer is provided in a development process of this Bluetooth device, so as to perform protocol adaptation and conversion, thereby adapting to a wide range of different types of Bluetooth devices, and providing the Bluetooth devices with a networking function.

To make the solutions of the embodiments of this specification clearer, the following provides a specific embodiment for description.

A client first performs Bluetooth scanning to obtain first device information of a surrounding Bluetooth device. During the establishment of a connection for the first time, a listening service port is established based on a universally unique identifier (UUID) provided by the Bluetooth device, and thus, a connection to the Bluetooth device is established based on the listening service port. In this case, the connection generally does not need a networking function to a remote server.

After the connection is established, the Bluetooth device sends a corresponding service request (for example, a payment service or a customized service). After receiving the service request, a client determines a communication link based on first device information.

Because protocol adaptation and aggregation are pre-integrated in the Bluetooth device, the service request sent by the Bluetooth device can use a client standard protocol, and information is also transmitted on the established communication link at partially by using the client standard protocol.

For example, assume that the Bluetooth device is an authorized vendor, and the service request is a payment service that can be supported by the client (including, for example, obtaining a payment code, obtaining a payment receiving code, or querying a payment account), a communication link between the Bluetooth device and the client is established, and the client forwards the service request to the remote server based on the above-mentioned communication link, and completes the above-mentioned payment service through proxying and forwarding of the client. For example, a request for obtaining a payment receiving code is forwarded to the server, a payment receiving code returned by the server is received, and the payment receiving code is sent to the Bluetooth device based on the above-mentioned communication link.

For another example, assume that after matching, it is identified that the first device information matches the second device information, that is, the Bluetooth device and a device on which the client is located are devices manufactured by the same vendor and have matched device models or chip functions (for example, both are devices of the same vendor configured by using WearEngine), and the vendor has provided a device communication link between devices of the vendor in advance. For the service request, the device communication link provided by the vendor is used to establish a communication link between the Bluetooth device, the device communication link, and the client, so as to implement 4G/5G networking, thereby implementing stabler communication.

For another example, assume that if it is identified that the Bluetooth device does not belong to a predetermined device set, that is, a related function of the Bluetooth device is not authorized by the client, a standard communication link provided by an operating system of the device on which the client is located can be used to establish a communication link between the Bluetooth device and the standard communication link, so as to perform 4G/5G networking.

Based on the above-mentioned examples, it can be identified that the embodiments of this specification can be widely adapted to different types of Bluetooth devices to connect the Bluetooth devices to a network. In addition, for different service requests in the same Bluetooth device, proper communication links can be selected based on a device type and a service request type.

Based on the same idea, one or more embodiments of this specification further provide an apparatus and a device that correspond to the above-mentioned method, as shown in FIG. 6 and FIG. 7.

According to a third aspect, corresponding to the first aspect, embodiments of this specification further provide a networking apparatus for a Bluetooth device, and the apparatus is applied to a client. FIG. 6 is a schematic diagram illustrating a structure of a networking apparatus for a Bluetooth device, according to embodiments of this specification. The apparatus includes the following: a receiving module 601, configured to receive a service request using a client standard protocol that is sent by the Bluetooth device; an acquisition module 603, configured to obtain first device information of the Bluetooth device; a determining module 605, configured to determine a communication link based on the first device information, where the communication link uses the client standard protocol; and a transmission module 607, configured to transmit the service request to a back-end server over the communication link.

Optionally, the determining module 605 determines the communication link based on the first device information and a service request type; or obtains second device information of a device on which the client is located, and determines the communication link based on the first device information and the second device information.

Optionally, when the first device information belongs to a predetermined device set, and the service request type does not match the client, the determining module 605 determines a vendor application corresponding to the first device information, and establishes a communication link between the Bluetooth device and the vendor application; or when the first device information belongs to a predetermined device set, and the service request type matches the client, the determining module 605 establishes a communication link between the Bluetooth device and the client.

Optionally, when the first device information matches the second device information, the determining module 605 determines a device communication link provided by the device on which the client is located, and establishes a communication link between the Bluetooth device, the device communication link, and the client.

Optionally, when the first device information does not belong to the predetermined device set, the determining module 605 determines a standard communication link provided by an operating system of the device on which the client is located, and establishes a communication link between the Bluetooth device and the standard communication link.

Optionally, the determining module 605 scans surrounding Bluetooth devices to obtain a universally unique identifier included in the first device information of the Bluetooth device, and establishes a communication link with the client based on the universally unique identifier.

Optionally, the determining module 605 determines a Bluetooth network consisting of a plurality of Bluetooth devices, and receives a universally unique identifier included in the first device information of the Bluetooth device and broadcast by the Bluetooth network.

According to a fourth aspect, corresponding to the second aspect, embodiments of this specification provide another networking apparatus for a Bluetooth device, and the apparatus is applied to a Bluetooth device. FIG. 7 is a schematic diagram illustrating a structure of another networking apparatus for a Bluetooth device, according to embodiments of this specification. The apparatus includes the following: a generation module 701, configured to generate a service request and determine a protocol type of the service request; a conversion module 703, configured to convert the protocol type of the service request into a client standard protocol; and a sending module 705, configured to send a service request using the client standard protocol to a client, so that the client determines a communication link and transmits the service request to a server based on the communication link.

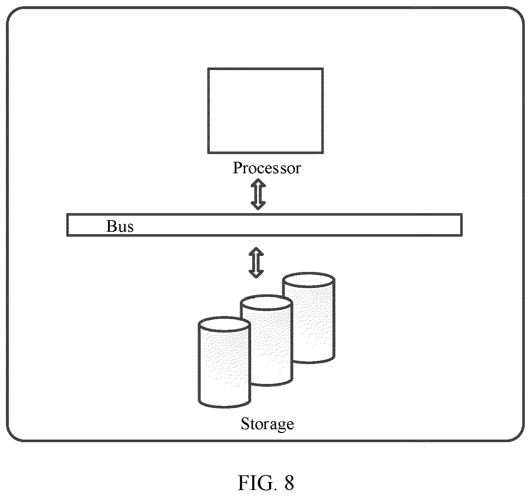

According to a fifth aspect, FIG. 8 is a schematic diagram illustrating a structure of an electronic device, according to embodiments of this specification. The device includes at least one processor and a storage communicatively connected to the at least one processor. The storage stores instructions executable by the at least one processor, and the instructions are executed by the at least one processor, to cause the at least one processor to perform the method according to the first aspect or the second aspect.

According to a sixth aspect, based on the same idea, embodiments of this specification further provide a non-volatile computer storage medium corresponding to the above-mentioned method, and the non-volatile computer storage medium stores computer-executable instructions. After a computer reads the computer-executable instructions in the storage medium, the instructions cause one or more processors to perform the method according to the first aspect or the second aspect.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. Almost all designers program an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. The designer performs programming to "integrate" a digital system to a PLD without requesting a chip manufacturer to design and produce an application-specific integrated circuit chip. In addition, at present, instead of manually manufacturing an integrated circuit chip, this type of programming is mostly implemented by using "logic compiler" software. The programming is similar to a software compiler used to develop and write a program. Original code needs to be written in a particular programming language for compilation. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). The very-high-speed integrated circuit hardware description language (VHDL) and Verilog are most commonly used. A person skilled in the art should also understand that a hardware circuit that implements a logical method procedure can be readily obtained once the method procedure is logically programmed by using some described hardware description languages and is programmed into an integrated circuit.

A controller can be implemented by using any appropriate method. For example, the controller can be a microprocessor or a processor, or a computer-readable medium that stores computer-readable program code (such as software or firmware) that can be executed by the microprocessor or the processor, a logic gate, a switch, an application-specific integrated circuit (ASIC), a programmable logic controller, or an embedded microprocessor. Examples of the controller include but are not limited to the following microprocessors: ARC 625D, Atmel AT91SAM, Microchip PIC18F26K20, and Silicone Labs C8051F320. The memory controller can also be implemented as a part of the control logic of the memory. A person skilled in the art also knows that, in addition to implementing the controller by using only the computer-readable program code, logic programming can be performed on method steps to enable the controller to implement the same function in forms of the logic gate, the switch, the application-specific integrated circuit, the programmable logic controller, the embedded microcontroller, etc. Therefore, the controller can be considered as a hardware component, and an apparatus included in the controller for implementing various functions can also be considered as a structure in the hardware component. Alternatively, the apparatus configured to implement various functions can even be considered as both a software module implementing the method and a structure in the hardware component.

The system, apparatus, module, or unit illustrated in the above-mentioned embodiments can be specifically implemented by using a computer chip or an entity, or can be implemented by using a product having a specific function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above apparatus is described by dividing functions into various units. Certainly, when this specification is implemented, functions of the units can be implemented in one or more pieces of software and/or hardware.

A person skilled in the art should understand that the embodiments of this specification can be provided as methods, systems, or computer program products. Therefore, the embodiments of this specification can use a form of hardware only embodiments, software only embodiments, or embodiments with a combination of software and hardware. In addition, a form of a computer program product that is implemented on one or more computer-usable storage media (including but not limited to a disk memory, a CD-ROM, an optical memory, etc.) that include computer-usable program code can be used in the embodiments of this specification.

This specification is described with reference to the flowcharts and/or block diagrams of the method, the device (system), and the computer program product according to the embodiments of this specification. It should be understood that computer program instructions can be used to implement each procedure and/or each block in the flowcharts and/or the block diagrams and a combination of a procedure and/or a block in the flowcharts and/or the block diagrams. These computer program instructions can be provided for a general-purpose computer, a dedicated computer, an embedded processor, or a processor of another programmable data processing device to generate a machine, so the instructions executed by the computer or the processor of the another programmable data processing device generate an apparatus for implementing a specific function in one or more processes in the flowcharts and/or in one or more blocks in the block diagrams.

These computer program instructions can be stored in a computer-readable storage that can instruct the computer or the another programmable data processing device to work in a specific way, so the instructions stored in the computer-readable storage generate an artifact that includes an instruction apparatus. The instruction apparatus implements a specific function in one or more processes in the flowcharts and/or in one or more blocks in the block diagrams.

The computer program instructions can alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

In a typical configuration, a computing device includes one or more processors (CPU), an input/output interface, a network interface, and a memory.

The memory can include a non-permanent memory in a computer readable medium, a random access memory (RAM), and/or a non-volatile memory, such as a read-only memory (ROM) or a flash memory (flash RAM). The memory is an example of the computer-readable medium.

Computer-readable media, including permanent and non-permanent, removable and non-removable media, can implement information storage by any method or technology. The information can be computer-readable instructions, a data structure, a program module, or other data. Examples of the computer storage medium include but are not limited to a phase change random access memory (PRAM), a static random access memory (SRAM), a dynamic random access memory (DRAM), a random access memory (RAM) of another type, a read-only memory (ROM), an electrically erasable programmable read-only memory (EEPROM), a flash memory or another memory technology, a compact disc read-only memory (CD-ROM), a digital versatile disc (DVD), or another optical storage, a cassette, a cassette magnetic disk storage, or another magnetic storage device or any other non-transmission medium. The computer storage medium can be configured to store information that can be accessed by the computing device. Based on the definition in this specification, the computer-readable medium does not include transitory media such as a modulated data signal and carrier.

It is worthwhile to further note that the terms "include", "comprise", or any other variants thereof are intended to cover a non-exclusive inclusion, so that a process, method, product, or device that includes a list of elements not only includes those elements but also includes other elements which are not expressly listed, or further includes elements inherent to such a process, method, product, or device. Without more constraints, an element preceded by "includes a ..." does not preclude the existence of additional identical elements in the process, method, product or device that includes the element.

This specification can be described in the general context of computer-executable instructions, for example, a program module. Generally, the program module includes a routine, a program, an object, a component, a data structure, etc. executing a specific task or implementing a specific abstract data type. This specification can alternatively be practiced in distributed computing environments. In the distributed computing environments, tasks are performed by remote processing devices connected through a communication network. In the distributed computing environments, the program module can be located in a local and remote computer storage medium including a storage device.

The embodiments of this specification are described in a progressive way. For the same or similar parts of the embodiments, mutual references can be made between the embodiments. Each embodiment focuses on a difference from other embodiments. Particularly, the embodiments of the apparatus, device, and non-volatile computer storage medium are basically similar to the method embodiments, and therefore are described briefly. For related parts, references can be made to related descriptions in the method embodiments.

Specific embodiments of this specification are described above. Other embodiments fall within the scope of the appended claims. In some cases, actions or steps described in the claims can be performed in an order different from those in the embodiments and desired results can still be achieved. In addition, processes described in the accompanying drawings do not necessarily require a specific order or a sequential order shown to achieve the desired results. In some implementations, multitasking and parallel processing are also feasible or may be advantageous.

The above-mentioned descriptions are merely one or more embodiments of this specification and are not intended to limit this specification. For a person skilled in the art, one or more embodiments of this specification can have various changes and variations. Any modification, equivalent replacement, improvement, etc. made within the spirit and principle of one or more embodiments of this specification shall fall within the scope of the claims of this specification.

## Claims

1. A networking method for a Bluetooth device, applied to a client, wherein the method comprises:
receiving a service request using a client standard protocol that is sent by the Bluetooth device;
obtaining first device information of the Bluetooth device;
determining a communication link based on the first device information, wherein the communication link uses the client standard protocol; and
transmitting the service request to a server over the communication link.

2. The method according to claim 1, wherein the determining a communication link based on the first device information comprises:
determining the communication link based on the first device information and a service request type; or
obtaining second device information of a device on which the client is located, and determining the communication link based on the first device information and the second device information.

3. The method according to claim 2, wherein the determining the communication link based on the first device information and a service request type comprises:
when the first device information belongs to a predetermined device set, and the service request type does not match the client, determining a vendor application corresponding to the first device information, and establishing a communication link between the Bluetooth device and the vendor application; or
when the first device information belongs to a predetermined device set, and the service request type matches the client, establishing a communication link between the Bluetooth device and the client.

4. The method according to claim 2, wherein the determining the communication link based on the first device information and the second device information comprises:
when the first device information matches the second device information, determining a device communication link provided by the device on which the client is located; and
establishing a communication link between the Bluetooth device, the device communication link, and the client.

5. The method according to claim 3, wherein the determining a communication link based on the first device information comprises:
when the first device information does not belong to the predetermined device set, determining a standard communication link provided by an operating system of the device on which the client is located, and establishing a communication link between the Bluetooth device and the standard communication link.

6. The method according to claim 1, wherein the determining a communication link based on the first device information comprises:
scanning surrounding Bluetooth devices to obtain a universally unique identifier comprised in the first device information of the Bluetooth device; and
establishing a communication link with the client based on the universally unique identifier.

7. The method according to claim 6, wherein when there are a plurality of surrounding Bluetooth devices, the obtaining a universally unique identifier comprised in the first device information of the Bluetooth device comprises:
determining a Bluetooth network consisting of the plurality of Bluetooth devices, and receiving a universally unique identifier comprised in the first device information of the Bluetooth device and broadcast by the Bluetooth network.

8. A networking method for a Bluetooth device, applied to the Bluetooth device, wherein the method comprises:
generating a service request, and determining a protocol type of the service request;
converting a protocol type of the service request into a client standard protocol; and
sending a service request using the client standard protocol to a client, so that the client determines a communication link and transmits the service request to a server based on the communication link.

9. A networking apparatus for a Bluetooth device, applied to a client, wherein the apparatus comprises:
a receiving module, configured to receive a service request using a client standard protocol that is sent by the Bluetooth device;
an acquisition module, configured to obtain first device information of the Bluetooth device;
a determining module, configured to determine a communication link based on the first device information, wherein the communication link uses the client standard protocol; and
a transmission module, configured to transmit the service request to a back-end server over the communication link.

10. A networking apparatus for a Bluetooth device, applied to the Bluetooth device, wherein the apparatus comprises:
a generation module, configured to generate a service request and determine a protocol type of the service request;
a conversion module, configured to convert the protocol type of the service request into a client standard protocol; and
a sending module, configured to send a service request using the client standard protocol to a client, so that the client determines a communication link and transmits the service request to a server based on the communication link.

11. An electronic device, comprising:
at least one processor; and
a storage communicatively connected to the at least one processor, wherein
the storage stores instructions executable by the at least one processor, and the instructions are executed by the at least one processor, to cause the at least one processor to perform the method according to any one of claims 1 to 8.
